# EUROPEAN PATENT SPECIFICATION

(11) **EP 3 444 653 B1**
(45) Date of publication and mention of the grant of the patent: **29.04.2020**
(21) Application number: 18179928.9
(22) Date of filing: 26.06.2018
(51) Int. Cl.: G02B 27/01

(54) **HEAD-UP-DISPLAY**
HEAD-UP-ANZEIGE
AFFICHAGE TÊTE HAUTE

(30) Priority: 27.06.2017 DE 102017114237
(43) Date of publication of application: 20.02.2019
(73) Proprietor: Valeo Schalter und Sensoren GmbH, 74321 Bietigheim-Bissingen (DE)
(72) Inventor: Le Toumelin, Loic, 74321 Bietigheim-Bissingen (DE)

(56) References cited:
- WO-A1-2014/163077
- WO-A1-2017/002290

## Description

The present invention refers to a head-up-display. The present invention particularly refers to an improved kinematics for a combiner head-up-display.

Head-up-displays, such as combiner head-up-displays (cHUD) are widely known in the art. Combiner head-up-displays comprise an imaging device which project the image to a combiner and thus to a kind of screen. The driver of a vehicle, for example, may thus see the image when looking on the combiner.

As the driver sees the image in a clear manner especially in case the combiner is aligned to the drivers eyebox, i.e. to the position, where the eyes of the driver are located, the movement of the combiner from its resting position to its working position is an important factor.

With this regard, WO 2017/002290 A1 describes a combiner raising/lowering device which is provided with: a supporting section, which has a first pin and a second pin, and which supports a combiner; and two side surface sections, which are provided on both the sides of the combiner, respectively, and each of which has a first groove in which the first pin slides, and a second groove in which the second pin slides, each of said surface sections supporting the support section so as to be capable of rotation about the first pin if the first pin is positioned at an end portion of the first groove.

Further, JP 2014-163962 describes a head-up-display. To provide an in-vehicle display device which works with reduced force acting on a transmission gear engaged with a feed screw. The HUD device includes: a reflector plate which is provided to be extendable and retractable from/to a base; a moving member coupled with the reflector plate; and driving means which is provided in the base and moves the moving member to extend and retract the reflector plate. The driving means includes; a feed screw which is rotated by driving force of a motor; a transmission gear which is engaged with the feed screw and is rotatable moved along an axial direction of the feed screw, which is a direction of extending/retracting movement of the moving member; a transmission shaft which is rotatable held by the moving member and rotatable supports the transmission gear; a pair of rack gears, each of which is provided at either end of the transmission shaft and is rotated interlockingly with the transmission gear; and a pair of racks, which is engaged with the pair of rack gear and is spaced apart from each other in a direction perpendicular to the direction of the extending/retracting movement of the moving member.

It is an object of the present invention to provide a solution for a combiner head-up-display which overcomes at least one disadvantage of the prior art. It is particularly an object of the present invention to provide a head-up-display which provides an improved movement of a combiner from its resting position to its working position.

This object is achieved by the independent claims. Advantageous embodiments are given in the dependent claims, in the further description as well as in the figures, wherein the described embodiments can, alone or in any combination of the respective embodiments, provide a feature of the present invention unless not clearly excluded.

In particular, the present invention provides a head-up-display for a vehicle, comprising a combiner which is capable of being displaced in a first axis from a resting position to a working position and which is subsequently capable of being tilted, wherein the head-up-display comprises
- two lateral guiding elements each comprising a first groove and a second groove, wherein a first portion is provided parallel to the first axis in which the first groove and the second groove proceed substantially parallel to each other and parallel to the first axis and wherein a second portion is provided parallel to the first axis in which the first groove proceeds parallel to the first axis and in which the direction of the second groove is varied such, that first groove and the second groove converge, or such, that first groove and the second groove diverge, wherein the first portion, relating to the second portion, is located in the direction to the resting position of the combiner and the second portion, relating to the first portion, is located in the direction to the working position of the combiner, and wherein the lateral guiding elements are located at opposite positions with regard to the combiner in a radial direction with regard to the first axis;
- a driving shaft which is driven by a motor and which acts on the combiner for displacing the combiner in the first axis; wherein the driving shaft is guided in the second grooves of the lateral guiding elements;
- a straight movement guiding shaft which acts on the combiner for defining a straight movement of the combiner in the first axis; wherein the straight movement guiding shaft is guided in the first grooves of the lateral guiding elements;
- a tilting shaft which acts on the combiner for defining a tilt of the combiner; wherein the tilting shaft is guided in the second grooves of the lateral guiding elements and is positioned between the driving shaft and the straight movement guiding shaft; and
- a tilter, wherein the tilter comprises an angled groove, wherein the angled groove is in superposition with the second grooves when the straight movement guiding shaft is in its end position which determines the working position of the combiner in the first axis and which angled groove receives the driving shaft and the tilting shaft; wherein
- the combiner comprises a combiner support being rigidly fixed to a combiner screen; wherein the combiner support comprises a groove which is at least partly straight, which groove receives the tilting shaft and which groove in its straight portion is angled with regard to that portion of the angled groove of the tilter, which superposes with the portion of the second groove which is not parallel to the first groove.

The basic idea of the invention is thus an improved arrangement of a combiner head-up-display which allows an improved displacement of the head-up-display. In detail, the above arrangement allows a displacement of the head-up-display in which the latter is firstly moved in a straight manner along the first axis and afterwards a tilt of the combiner, or its combiner screen, respectively is performed without a movement in the direction of the first axis. This arrangement may show significant advantages as will be down below.

In detail, it is described a head-up-display for a vehicle, such as for a car. In more detail a head-up-display comprising a combiner (cHUD) is described. Such a combiner comprises a screen for projecting information thereon which might be useful for a vehicles driver. Next to the combiner screen a combiner support which is rigidly connected to the combiner screen is provided. As generally known per se, such a head-up-display may be located in the dashboard of the vehicle and may be designed for having at least two positions. The first position is a resting position, or stand by-position, respectively, in which the combiner may be located in the dashboard and may not be visible for the driver. The second position is a working position, in which the combiner is located outside the dashboard and particularly in front of the windscreen so that the combiner is in the visual field of the driver. Therefore, it is of importance that the combiner may be displaced from the resting position to the working position, and vice versa.

In order to result in a very good image to the driver independently of the size of the driver, it may be required to not only displace the combiner in a first axis, which may be a vertical axis, but additionally it may be required to tilt the combiner. Advantageously the combiner is tilted around an axis perpendicular to the first axis.

Therefore, the combiner of the head-up-display is capable of being displaced in a first axis, in particular in order to move the combiner out of its resting position to come into the working position, and which is further capable of being tilted, in particular in order to adapt the combiner to the size of the driver. With this regard, the head-up-display is capable of allowing the combiner to firstly only be displaced along the first axis and thus make a straight movement without any tilt, and after the straight movement is finished, to make a tilt, only, and thus without further making a straight movement.

In order to achieve the above, the head-up-display comprises the following features.

The head-up-display comprises two lateral guiding elements. These guiding elements are located at opposite positions with regard to the combiner in a radial direction with regard to the first axis. In other words, with regard to the movement direction of the combiner, the lateral guiding elements are located next to the combiner on both sides of the combiner, in which sides the combiner is guided and fixed. Thus the lateral guiding elements provide the main guidance of the combiner.

With this regard, the lateral guiding elements each comprise a first groove and a second groove. These grooves are preferably separated from each other, even though this is not strictly required. Regarding the arrangement of the grooves, a first portion is provided which proceeds parallel to the first axis and thus in the direction in which the combiner is moved from its resting position to its working position. In the first portion, the first groove and the second groove proceed substantially parallel to each other. Thus, both grooves proceed substantially parallel to the first axis. Further to the first portion, a second portion is provided, which also proceeds parallel to direction of the first axis. In the second portion, the first groove further proceeds in the first axis, or parallel thereto, respectively. However, regarding the second groove in the second portion, it is provided that the direction of the second groove is varied such, that first groove and the second groove converge, or such, that first groove and the second groove diverge. Thus, the first groove proceeds at least in the first portion and the second portion parallel to the first axis. For example, the first groove may completely proceed parallel to the first axis. The second groove, however, is angled such, that it comprises a part which is parallel to the first axis and parallel to the first groove and a part in which the direction of the second groove is not parallel to the first groove. Of course, both before described parts of the groove are connected to each other so that a shaft may move from the first part to the second part.

The specific arrangement according to which the grooves are formed to converge or to diverge may be chosen with regard to the present application and detail with regard to the specific mounting conditions. In detail, if the grooves are formed to converge or diverge may define in which direction the combiner will tilt. However, an arrangement in which the grooves converge may allow an especially compact arrangement.

Further, the first portion is located in the direction of the resting position of the combiner and the second portion is located in the direction of the working position of the combiner.

The head-up-display further comprises a driving shaft which is driven by a motor and which acts on the combiner for displacing the combiner in the first axis. Regarding the driving shaft, the latter is guided in the second grooves and thus in each of the second groove of the first lateral guiding element and the second lateral guiding element. In order to displace the combiner, the motor may transmit a driving force to the driving shaft which thus rotates and acts on the lateral guiding elements and thus allows the driving shaft and thus the combiner to be displaced.

With regard to the expression "shaft", in general, it has to be noted that according to the invention, a shaft may be a continuous part which proceeds between the lateral guiding elements, or a shaft may define an axis in which, for example, pins are located, such as each a pin for each lateral guiding elements. Further, it may be provided that each shafts provided in the head-up-display proceed parallel to each other.

Further, a straight movement guiding shaft is provided for defining a straight movement of the combiner in the first axis. In other words, in case the combiner is moved, the straight movement guiding shaft is also moved and thus guides the combiner during the straight movement. With this regard, the straight movement guiding shaft is guided in the first grooves and thus in each of the first groove of the first lateral guiding element and the second lateral guiding element, because of which the straight movement guiding shaft is moved in a direction parallel to the first axis, only. In order to generate a tilt of the combiner, it may be preferred that the straight movement guiding shaft is fixed in the combiner and in particular in a combiner support such, that when the straight movement guiding shaft rotates, the combiner rotates as well.

Further, a tilting shaft for defining a tilt of the combiner is provided. The tilting shaft is guided in the second groove and thus in each of the second groove of the first lateral guiding element and the second lateral guiding element. It is positioned between the driving shaft and the straight movement guiding shaft. In case the combiner is moved to its working position and in more detail in case the straight movement guiding shaft reaches its end position in the first groove, the tilting shaft may further be moved and thereby defines, or causes, respectively, a tilt of the combiner as described in more detail below.

The head-up-display further comprises a tilter. The tilter is formed as a further guiding element, which may be formed plate-like and which may exemplarily be located between the combiner support and the motor, or a housing of the motor, respectively, in a direction being radial with regard to the first axis. The tilter comprises an angled groove. The angled groove is formed such, that it is in superposition with the second grooves when the straight movement guiding shaft is in its end position which determines the working position of the combiner in the first axis. In other words, the angled groove of the tilter is formed correspondingly to the region of the second grooves of the lateral guiding elements in which the second grooves passes from their part in which it is parallel to the first axis and thus to the first groove of the lateral guiding elements to the second part in which the first grooves and the second grooves of the lateral guiding elements converge or diverge and thus the section comprising an angle. Therefore, in case a shaft passes the first part and goes into the second part of the second groove of the lateral guiding elements, the latter also changes its direction in the angled groove of the tilter. Further, the angled groove of the tilter receives the driving shaft and the tilting shaft.

It is further provided that, like described before, the combiner comprises a combiner support and a combiner screen, wherein the combiner support is rigidly fixed to the combiner screen. Regarding the combiner support, the latter comprises a groove. The groove at least partly or even completely proceeds in a straight direction. This groove receives the tilting shaft. Further, with regard to the arrangement of the groove of the combiner support, it is provided that the groove, in its straight portion and thus for example the whole groove, is angled with regard to that portion of the angled groove of the tilter, which superposes with the portion of the second groove which is not parallel to the first groove. This allows, in case a shaft moves through the groove of the tilter that the combiner support is tilted.

With this regard, it may be provided that the combiner support comprises one element which proceeds in the direction of the first axis or may comprise two elements which are located on each sides of the combiner screen in the direction radial to the first axis. This element or these elements may carry the respective groove as described in order to receive the tilting shaft.

An arrangement of a head-up-display as described before allows an improved kinematics of the combiner and thus an improved movement of the combiner from its resting position to its working position, including a straight displacement and a tilt being separated from each other.

In detail, starting from a position of the combiner in its resting position, the motor will act on the driving shaft and will thus set the driving shaft in rotation. Due to the guidance of the different shafts in the respective grooves, the driving shaft, the straight movement guiding shaft and the tilting shaft will be moved in a straight direction, guided by the first grooves and the second grooves in the lateral guiding elements which firstly proceed parallel. Such a movement is continued until the straight movement guiding shaft has reached its final position in the working position along the first axis of the combiner. The driving shaft, the straight movement guiding shaft and the tilting shaft are arranged with regard to each other such, that when the straight movement guiding such reaches its end position and is thus blocked from a further straight movement, such as at the end of the first grooves, the tilting shaft reaches that point at which the second grooves of the lateral guiding elements is transferred from the first part, which is parallel to the first grooves, to the second part, which diverges or converges with regard to the first grooves. Correspondingly, that point is reached in which the tilting shaft passes the different directions of the angled groove and is in superposition with the second grooves. As the driving shaft stays free in its grooves, a further movement is effected which forces the tilting shaft to further be moved in a direction varying from the first axis. Due to the fact that the groove of the combiner support is angled with regard to the groove of the tilter and the second groove, by moving the tilting shaft further, the combiner supports, and thus the combiner, is tilted. Due to the provision of the tilter, this is possible only when the straight movement guiding shaft reaches its end position and when the angled groove of the tilter is thus in superposition with the second grooves. It is thus allowed that the combiner is tilted around the axis of the standing straight movement guiding shaft and thus around a fixed axis.

To summarize, the arrangement is thus based on superposition of the angled groove of the tilter and the respective portion of the second grooves. In case the grooves are not fully interposed, only a straight movement is allowed. In case these grooves superpose, a kind of second kinematics is released and a tilt is allowed only, as the straight movement guiding shaft is in its end position and acts as a tilting axis. Further, as the groove of the combiner support is not superposed with the further described grooves, the latter can be tilted by moving the tilting shaft.

Especially a kinematics as described before allows an especially advantageous movement of the combiner.

Due to the above arrangement, it is sufficient to use one motor for both the straight movement, or linear movement, respectively and the tilting process. This allows saving costs as well as space for installing the head-up-display in a dashboard, for example.

Further, separating the straight movement, or linear movement, respectively and the tilting process may reduce picture distortion which may improve the quality of the head-up-display.

Apart from that, as tilting the combiner is allowed around a fixed axis, i.e. the straight movement guiding shaft, this may ensure that the reached tilt exactly corresponds to the desired position which in turn allows an especially improved image which is visible on the combiner and in particular on the combiner screen for a driver of a vehicle.

With this regard, it may be especially preferred that the straight movement guiding shaft is fixed to the combiner such, that a rotation of the straight movement guiding shaft effects the combiner to tilt. This allows an especially simple and effective arrangement of the head-up-display.

According to an embodiment, the motor, for example the motor housing, is connected to the driving shaft such, that by transmitting a driving force to the driving shaft the motor is displaced together with the driving shaft in relation to the lateral guiding elements. According to this embodiment, it may thus be provided that the motor moves together with the driving shaft and additionally together with the combiner. Taking into consideration that the combiner tilts after having performed a straight movement, it may be realized that the center of gravity is closer to the axis of rotation, i.e. the straight movement guiding shaft. This allows providing less vibrations which may be advantageous with regard to image formation and further with regard to long-life reliability. Apart from that, the space which is required may be reduced, allowing introducing a head-up-display like described before even in small spaces.

For example, the driving shaft and the tilting shaft are connected to the motor, such as the motor housing such that by transmitting a driving force to the driving shaft the motor is displaced together with the driving shaft and the tilting shaft in relation to the lateral guiding elements. According to this embodiment, an especially simple arrangement may be realized, In particular, an especially low number of parts may be realized which allows a reliable operation and further a cost-saving arrangement may be realized.

According to a further embodiment, for displacing the driving shaft, the driving shaft comprises a toothed wheel at at least one end and at least one lateral guiding element comprises a toothed rack corresponding to the toothed wheel for interlocking with the toothed wheel. Preferably, both sides of the driving shaft comprise a tooth wheel and both of the lateral guiding elements each comprise a corresponding toothed rack. This embodiment allows for an especially defined straight movement and tilt of the combiner, allowing an especially defined adaption of the combiner to the driver and thus to an especially improved image. Apart from that, it may be secured in a very efficient manner that the head-up-display stays in place even in case of stronger vibrations, allowing an especially high reliability of the position of the combiner and thus of the image formed.

According to a further embodiment, the lateral guiding elements are part of a housing of the head-up-display. According to this embodiment, again, an especially simple arrangement may be realized. In particular, an especially low number of parts may be realized which allows a reliable operation and further a cost-saving arrangement.

According to a further embodiment, the head-up-display comprises a sensor for detecting the position of the combiner. This embodiment further allows an especially reliable positioning of the combiner as it is reliably known where the combiner exactly is positioned. In case of a wrong position, thus, a further adaption may be realized. The sensor may for example be a Hall sensor for detecting the position of the combiner, for example in case the combiner carries a magnet. Further, end sensors, such as switch sensors may be provided in the first groove, for example, at the respective end positions for detecting the resting position and the working position, or tilt position, respectively.

These and other aspects of the invention will be apparent from and elucidated with reference to the embodiments described hereinafter. Individual features disclosed in the embodiments con constitute alone or in combination an aspect of the present invention. Features of the different embodiments can be carried over from one embodiment to another embodiment.

In the drawings:
- Fig. 1: shows a schematic front-view of an embodiment of a head-up-display, wherein the guiding elements are omitted;
- Fig. 2: shows a schematic view of an embodiment of a guiding element for a head-up-display according to figure 1;
- Fig. 3: shows a schematic side-view of the head-up-display according to figure 1, wherein the forwardly located lateral guiding element is omitted for explanation purposes; and
- Fig. 4: shows a schematic side-view of the head-up-display according to figure 1, wherein a tilt sequence is visualized and wherein the forwardly located lateral guiding element is omitted for explanation purposes.

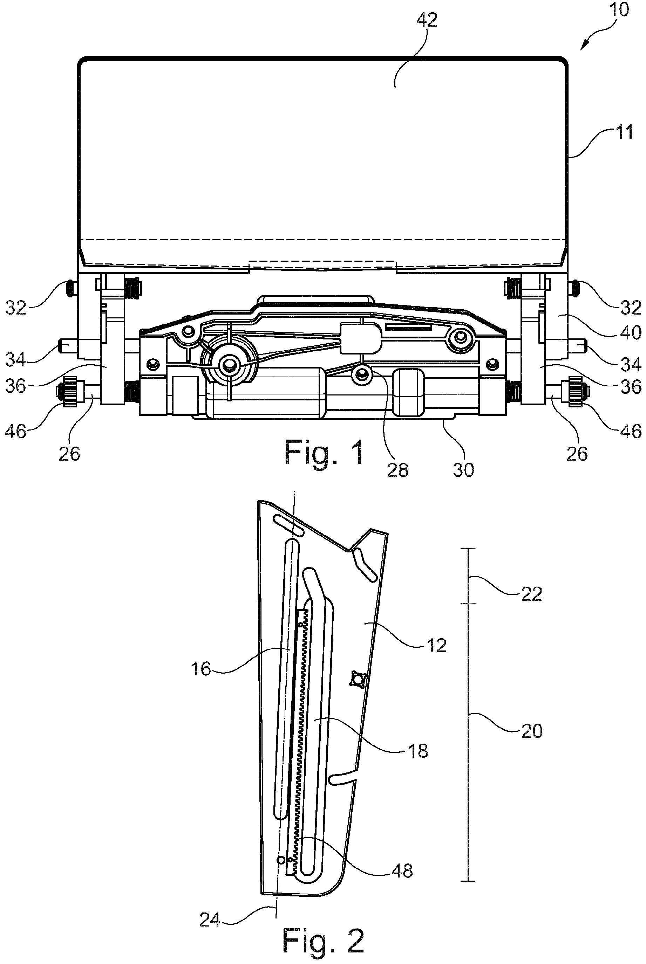

Figure 1 shows a head up display 10, which may be used in a vehicle, such as in a car. It may for example be located in a dashboard of the vehicle. The head-up-display 10 as shown in the figures is one which comprises a combiner 11 like described in detail below.

The head-up-display 10 comprises two lateral guiding elements 12, 14 each comprising a first groove 16 and a second groove 18 which are omitted in figure 1 but one of which is shown in figure 2. Regarding these grooves 16, 18, a first portion 20 is provided parallel to a first axis 24 in which the first groove 16 and the second groove 18 proceed parallel to each other and parallel to the first axis 24 and wherein a second portion 22 is provided parallel to the first axis 24 in which second portion 22 the first groove 16 proceeds parallel to the first axis 24 and in which the direction of the second groove 18 is varied such, that first groove 16 and the second groove 18 converge. The lateral guiding elements 12, 14 are located at opposite positions with regard to the combiner 11 in a radial direction with regard to the first axis 24. Thus, regarding figure 1, it is provided that on each of the left side and the right side, a corresponding lateral guiding element 12, 14 is present and guides the moving parts of the head-up-display 10 as described in detail below.

The head-up-display 10 further comprises a driving shaft 26 which is driven by a motor 28, the latter being located in a motor housing 30. The driving shaft 26 is connected to the combiner 11 for displacing the combiner 11 in the first axis 24. Further, the driving shaft 26 is guided in the second grooves 18 of both lateral guiding elements12, 14. It can further be seen that for displacing the driving shaft 26 the latter comprises toothed wheels 46 and the lateral guiding elements 12, 14 each comprise a toothed rack 48 corresponding to the toothed wheels 46 for interlocking with the toothed wheels 46.

Further, a straight movement guiding shaft 32 for defining a straight movement of the combiner 11 in the first axis 24 is provided, wherein the straight movement guiding shaft 32 is guided in the first grooves 16 of both lateral guiding elements 12, 14. Further, the straight movement guiding shaft 32 is fixed to the combiner 11, or the combiner support 40, respectively, so that a rotation of the straight movement guiding shaft 32 forces the combiner to tilt.

A tilting shaft 34 is further provided for defining a tilt of the combiner 11, wherein the tilting shaft 34 is guided in the second grooves 18 and is positioned between the driving shaft 26 and the straight movement guiding shaft 32.

The figures further show a tilter 36, wherein the tilter 36 comprises an angled groove 38, wherein the angled groove 38 is in superposition with the second grooves 18 when the straight movement guiding shaft 26 is in its end position which determines the working position of the combiner 11 in the first axis 24 and which angled groove 38 receives the driving shaft 26 and the tilting shaft 3.

Coming back to the combiner 11, the latter comprises a combiner support 40 and a combiner screen 42 which are rigidly connected to each other. The combiner support 40 comprises a groove 44 which is at least partly straight, which groove 44 receives the tilting shaft 34. According to the embodiment shown, the combiner support 40 is located at both lateral sides of the combiner screen 40 and thus both respective parts comprise a respective groove 44. The grooves 44 are angled with regard to that portion of the angled groove 38 of the tilter 36, which superposes with the portion of the second grooves 18 which are not parallel to the first grooves 16. The direction and the amount of the angle will define the direction of tilt and the amount of tilt

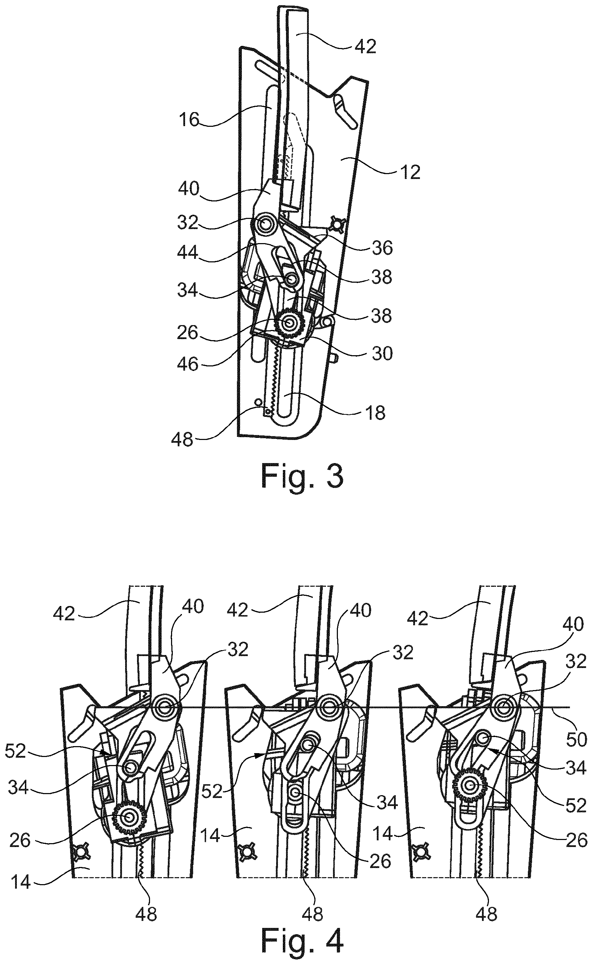

The working behavior of such a head-up display is shown in figure 4.

In detail, starting from a position of the combiner 11 in its resting position, which corresponds to a position at the very bottom of figure 3, the motor 28 will act on the driving shaft 26 and will thus set the driving shaft 26 in rotation. Therefore, the driving shaft 26, the straight movement guiding shaft 32 and the tilting shaft 34 will be moved in a straight direction, guided by the first grooves 16 and the second grooves 18 in the lateral guiding elements 12, 14 which firstly proceed parallel. According to the figures 3 and 4 the respective shafts and the combiner 11 together with the motor 28 are moved to the top. Such a movement is continued until the straight movement guiding shaft 32 has reached its final position in the working position along the first axis 24 of the combiner 11. This position is shown in figure 4 at the left hand side.

In other words, that position is reached in which the tilting shaft 34 passes the different directions of the angled groove 38 of the tilter 36 and of the second grooves 18. In the middle picture of figure 4 the gear wheel of the driving shaft 26 is not shown for clearness purposes. As the driving shaft 26 stays free in its grooves 18, a further movement is effected which forces the tilting 34 shaft to further be moved in a direction varying from the first axis 24. Due to the fact that the groove 44 of the combiner support 40 is angled with regard to the groove 38 of the tilter 36 and the second groove 18, it may be realized that by moving the tilting shaft 34 further, the combiner support 40, and thus the combiner 11, is tilted when the tilting shaft 34 follows the angled groove 38 and the second portion 22 of the second grooves 18. This is shown at position 52, where it is shown in detail, that the groove 44 of the combiner 11 and the angled groove 38 of the tilter and especially that portion thereof, which is parallel to the second part 22 of the second grooves 18 are not parallel to each other but a part of the combiner 11, or the combiner support 11, respectively, which is located next to the groove 44 overlaps with the angled groove 38. Therefore, this portion is moved by the tilting shaft 34 which follows the angled groove 38 which results in the combiner 11 to be tilted.

Due to the provision of the tilter 36, this is possible only when the straight movement guiding shaft 32 reaches its end position and when the angled groove 38 of the tilter 36 is thus in superposition with the second grooves 18. It is thus allowed that the combiner 11 is tilted around the axis of the standing straight movement guiding shaft 32 and thus around a fixed axis. This is visualized by the line 50 which is in a constant vertical position.

Further, it is shown that the shafts 26, 32 and 34 may generally be continuous between the lateral guiding elements 12, 14, but according to the shown embodiment, are arranged as pind being present at each of both sides in one axis each.

### Reference signs list

- 10: head-up-display
- 11: combiner
- 12: lateral guiding element
- 14: lateral guiding element
- 16: first groove
- 18: second groove
- 20: first portion
- 22: second portion
- 24: first axis
- 26: driving shaft
- 28: motor
- 30: motor housing
- 32: straight movement guiding shaft
- 34: tilting shaft
- 36: tilter
- 38: angled groove
- 40: combiner support
- 42: combiner screen
- 44: groove
- 46: toothed wheel
- 48: toothed rack
- 50: line
- 52: position

## Claims

1. Head-up-display for a vehicle, comprising a combiner (11) which is capable of being displaced in a first axis (24) from a resting position to a working position and which is subsequently capable of being tilted,
**characterized in that**
the head-up-display (10) comprises
- two lateral guiding elements (12, 14) each comprising a first groove (16) and a second groove (18), wherein a first portion (20) is provided parallel to the first axis (24) in which the first groove (16) and the second groove (18) proceed substantially parallel to each other and parallel to the first axis (24) and wherein a second portion (22) is provided parallel to the first axis (24) in which the first groove (16) proceeds parallel to the first axis (24) and in which the direction of the second groove (18) is varied such, that first groove (16) and the second groove (18) converge, or such, that first groove (16) and the second groove (18) diverge, wherein the first portion (20), relating to the second portion (22), is located in the direction to the resting position of the combiner (11) and the second portion (22), relating to the first portion (20), is located in the direction to the working position of the combiner (11), and wherein the lateral guiding elements (12, 14) are located at opposite positions with regard to the combiner (11) in a radial direction with regard to the first axis (24);
- a driving shaft (26) which is driven by a motor (28) and which acts on the combiner (11) for displacing the combiner (11) in the first axis (24); wherein the driving shaft (26) is guided in the second grooves (18) of the lateral guiding elements (12, 14);
- a straight movement guiding shaft (32) which acts on the combiner (11) for defining a straight movement of the combiner (11) in the first axis (24); wherein the straight movement guiding shaft (32) is guided in the first grooves (16) of the lateral guiding elements (12, 14);
- a tilting shaft (34) which acts on the combiner (11) for defining a tilt of the combiner (11); wherein the tilting shaft (34) is guided in the second grooves (18) of the lateral guiding elements (12, 14) and is positioned between the driving shaft (26) and the straight movement guiding shaft (32); and
- a tilter (36), wherein the tilter (36) comprises an angled groove (38), wherein the angled groove (38) is in superposition with the second grooves (18) when the straight movement guiding shaft (32) is in its end position which determines the working position of the combiner (11) in the first axis (24) and which angled groove (38) receives the driving shaft (26) and the tilting shaft (34); wherein
- the combiner (11) comprises a combiner support (40) being rigidly fixed to a combiner screen (42), wherein the combiner support (40) comprises a groove (44) which is at least partly straight, which groove (44) receives the tilting shaft (34) and which groove (44) in its straight portion is angled with regard to that portion of the angled groove (38) of the tilter (36), which superposes with the portion of the second groove (18) which is not parallel to the first groove (16).

2. Head-up-display according to claim 1, **characterized in that** the straight movement guiding shaft (32) is fixed to the combiner (11) such, that a rotation of the straight movement guiding shaft (32) effects the combiner (11) to tilt.

3. Head-up-display according to claim 1 or 2, **characterized in that** the motor (28) is fixed to the driving shaft (26) such, that by transmitting a driving force to the driving shaft (26) the motor (28) is moved together with the driving shaft (26) in relation to the lateral guiding elements (12, 14).

4. Head-up-display according to any of the preceding claims, **characterized in that** the driving shaft (26) and the tilting shaft (34) are fixed to the motor (28) such, that by transmitting a driving force to the driving shaft (26) the motor (28) and the tilting shaft (34) are moved together with the driving shaft (26) in relation to the lateral guiding elements (12, 14).

5. Head-up-display according to any of the preceding claims, **characterized in that** for displacing the driving shaft (26), the driving shaft (26) comprises a toothed wheel (46) at at least one end and at least one lateral guiding element (12, 14) comprises a toothed rack (48) corresponding to the toothed wheel (46) for interlocking with the toothed wheel (46).

6. Head-up-display according to any of the preceding claims, **characterized in that** the lateral guiding elements (12, 14) are part of a housing of the head-up-display (10).

7. Head-up-display according to any of the preceding claims, **characterized in that** the head-up-display (10) comprises a sensor for detecting the position of the combiner (11).

8. Head-up-display according to claim 7, **characterized in that** the sensor comprises a hall sensor.

9. Head-up-display according to any of the preceding claims, **characterized in that** the direction of the second grooves (18) of each lateral guiding element (12, 14) are varied such, that first grooves (16) and the second groove (18) converge.

10. Head-up-display according to any of claims 1 to 8, **characterized in that** the direction of the second grooves (18) of each lateral guiding element (12, 14) are varied such, that first grooves (16) and the second groove (18) diverge.

## Patentansprüche

1. Head-up-Anzeige für ein Fahrzeug, umfassend einen Combiner (11), der in der Lage ist, in einer ersten Achse (24) von einer Ruheposition in eine Arbeitsposition versetzt zu werden, und der nachfolgend in der Lage ist, geneigt zu werden,
**dadurch gekennzeichnet, dass**
die Head-up-Anzeige (10) Folgendes umfasst:
- zwei seitliche Führungselemente (12, 14), die jeweils eine erste Nut (16) und eine zweite Nut (18) umfassen, wobei ein erster Abschnitt (20) parallel zu der ersten Achse (24) bereitgestellt ist, in welcher die erste Nut (16) und die zweite Nut (18) im Wesentlichen parallel zueinander und parallel zu der ersten Achse (24) voranschreiten, und wobei ein zweiter Abschnitt (22) parallel zu der ersten Achse (24) bereitgestellt ist, in dem die erste Nut (16) parallel zu der ersten Achse (24) voranschreitet und in dem die Richtung der zweiten Nut (18) so variiert ist, dass die erste Nut (16) und die zweiten Nut (18) zusammenlaufen, oder so, dass die erste Nut (16) und die zweite Nut (18) auseinanderlaufen, wobei sich der erste Abschnitt (20) in Bezug auf den zweiten Abschnitt (22) in der Richtung zu der Ruheposition des Combiners (11) befindet, und sich der zweite Abschnitt (22) in Bezug auf den ersten Abschnitt (20) in der Richtung zu der Arbeitsposition des Combiners (11) befindet, und wobei sich die seitlichen Führungselemente (12, 14) in Bezug auf den Combiner (11) in einer radialen Richtung in Bezug auf die erste Achse (24) in entgegengesetzten Positionen befinden;
- eine Antriebswelle (26), die von einem Motor (28) angetrieben wird und die auf den Combiner (11) zum Versetzen des Combiners (11) in der ersten Achse (24) wirkt; wobei die Antriebswelle (26) in den zweiten Nuten (18) der seitlichen Führungselemente (12, 14) geführt wird;
- eine Führungswelle (32) für gerade Bewegung, die auf den Combiner (11) wirkt, um eine gerade Bewegung des Combiners (11) in der ersten Achse (24) zu definieren; wobei die Führungswelle (32) für gerade Bewegung in den ersten Nuten (16) der seitlichen Führungselemente (12, 14) geführt wird;
- eine Neigungswelle (34), die auf den Combiner (11) wirkt, um eine Neigung des Combiners (11) zu definieren; wobei die Neigungswelle (34) in den zweiten Nuten (18) der seitlichen Führungselemente (12, 14) geführt wird und zwischen der Antriebswelle (26) und der Führungswelle (32) für gerade Bewegung positioniert ist; und
- eine Neigungsvorrichtung (36), wobei die Neigungsvorrichtung (36) eine abgewinkelte Nut (38) umfasst, wobei die abgewinkelte Nut (38) die zweiten Nuten (18) überlagert, wenn sich die Führungswelle (32) für gerade Bewegung in ihrer Abschlussposition befindet, welche die Arbeitsposition des Combiners (11) in der ersten Achse (24) definiert, und wobei die abgewinkelte Nut (38) die Antriebswelle (26) und die Neigungswelle (34) aufnimmt; wobei
- der Combiner (11) eine Combiner-Stütze (40) umfasst, die starr an einem Combiner-Bildschirm (42) befestigt ist, wobei die Combiner-Stütze (40) eine Nut (44) umfasst, die mindestens teilweise gerade ist, wobei die Nut (44) die Neigungswelle (34) aufnimmt und wobei die Nut (44) in ihrer geraden Position in Bezug auf jenen Abschnitt der abgewinkelten Nut (38) der Neigungsvorrichtung (36), welcher den Abschnitt der zweiten Nut (18) überlagert, der nicht parallel zu der ersten Nut (16) ist, abgewinkelt ist.

2. Head-up-Anzeige nach Anspruch 1, **dadurch gekennzeichnet, dass** die Führungswelle (32) für gerade Bewegung so an dem Combiner (11) befestigt ist, dass eine Drehung der Führungswelle (32) für gerade Bewegung bewirkt, dass sich der Combiner (11) neigt.

3. Head-up-Anzeige nach Anspruch 1 oder 2, **dadurch gekennzeichnet, dass** der Motor (28) so an der Antriebswelle (26) befestigt ist, dass der Motor (28) durch Übertragen einer Antriebskraft auf die Antriebswelle (26) in Relation zu den seitlichen Führungselementen (12, 14) gemeinsam mit der Antriebswelle (26) bewegt wird.

4. Head-up-Anzeige nach einem der vorangehenden Ansprüche, **dadurch gekennzeichnet, dass** die Antriebswelle (26) und die Neigungswelle (34) so an dem Motor (28) befestigt sind, dass der Motor (28) und die Neigungswelle (34) durch Übertragung einer Antriebskraft auf die Antriebswelle (26) in Relation zu den seitlichen Führungselementen (12, 14) gemeinsam mit der Antriebswelle (26) bewegt werden.

5. Head-up-Anzeige nach einem der vorangehenden Ansprüche, **dadurch gekennzeichnet, dass** die Antriebswelle (26) für ein Versetzen der Antriebswelle (26) ein Zahnrad (46) an mindestens einem Ende umfasst und mindestens ein seitliches Führungselement (12, 14) eine Zahnstange (48) umfasst, die dem Zahnrad (46) entspricht, um sich mit dem Zahnrad (46) zu verzahnen.

6. Head-up-Anzeige nach einem der vorangehenden Ansprüche, **dadurch gekennzeichnet, dass** die seitlichen Führungselemente (12, 14) Teil eines Gehäuses der Head-up-Anzeige (10) sind.

7. Head-up-Anzeige nach einem der vorangehenden Ansprüche, **dadurch gekennzeichnet, dass** die Head-up-Anzeige (10) einen Sensor zum Erkennen der Position des Combiners (11) umfasst.

8. Head-up-Anzeige nach Anspruch 7, **gekennzeichnet dadurch, dass** der Sensor einen Hallsensor umfasst.

9. Head-up-Anzeige nach einem der vorangehenden Ansprüche, **dadurch gekennzeichnet, dass** die Richtung der zweiten Nuten (18) jedes seitlichen Führungselements (12, 14) so variiert wird, dass erste Nuten (16) und die zweiten Nuten (18) zusammenlaufen.

10. Head-up-Anzeige nach einem der Ansprüche 1 bis 8, **dadurch gekennzeichnet, dass** die Richtung der zweiten Nuten (18) jedes seitlichen Führungselements (12, 14) so variiert wird, dass erste Nuten (16) und die zweiten Nuten (18) auseinanderlaufen.

## Revendications

1. Affichage tête haute pour un véhicule, comprenant un combinateur (11) qui peut être déplacé dans un premier axe (24) d'une position de repos à une position de travail et qui peut ensuite être incliné,
**caractérisé en ce que**
l'affichage tête haute (10) comprend
deux éléments de guidage latéraux (12, 14) comprenant chacun une première rainure (16) et une seconde rainure (18), une première partie (20) étant située parallèlement au premier axe (24), la première rainure (16) et la seconde rainure (18) s'étendant sensiblement parallèlement l'une à l'autre et parallèlement au premier axe (24), et une seconde partie (22) étant située parallèlement au premier axe (24), la première rainure (16) s'étendant parallèlement au premier axe (24) et la direction de la seconde rainure (18) étant modifiée de sorte que la première rainure (16) et la seconde rainure (18) convergent, ou de sorte que la première rainure (16) et la seconde rainure (18) divergent, la première partie (20), par rapport à la seconde partie (22), étant située dans la direction de la position de repos du combinateur (11) et la seconde partie (22), par rapport à la première partie (20), étant située dans la direction de la position de travail du combinateur (11), et les éléments de guidage latéraux (12, 14) étant situés à des positions opposées par rapport au combinateur (11) dans une direction radiale par rapport au premier axe (24) ;
un arbre d'entraînement (26) qui est entraîné par un moteur (28) et qui agit sur le combinateur (11) pour déplacer le combinateur (11) dans le premier axe (24) ; l'arbre d'entraînement (26) étant guidé dans les secondes rainures (18) des éléments de guidage latéraux (12, 14) ;
un arbre de guidage de déplacement rectiligne (32) qui agit sur le combinateur (11) pour définir un déplacement rectiligne du combinateur (11) dans le premier axe (24) ; l'arbre de guidage de déplacement rectiligne (32) étant guidé dans les premières rainures (16) des éléments de guidage latéraux (12, 14) ;
un arbre d'inclinaison (34) qui agit sur le combinateur (11) pour définir une inclinaison du combinateur (11) ; l'arbre d'inclinaison (34) étant guidé dans les secondes rainures (18) des éléments de guidage latéraux (12, 14) et étant positionné entre l'arbre d'entraînement (26) et l'arbre de guidage de déplacement rectiligne (32) ; et
un dispositif d'inclinaison (36), le dispositif d'inclinaison (36) comprenant une rainure angulaire (38), la rainure angulaire (38) étant en superposition avec les secondes rainures (18) lorsque l'arbre de guidage de déplacement rectiligne (32) est dans sa position d'extrémité qui détermine la position de travail du combinateur (11) dans le premier axe (24) et laquelle rainure angulaire (38) reçoit l'arbre d'entraînement (26) et l'arbre d'inclinaison (34) ;
le combinateur (11) comprenant un support de combinateur (40) qui est fixé de manière rigide à un écran de combinateur (42), le support de combinateur (40) comprenant une rainure (44) qui est au moins partiellement rectiligne, laquelle rainure (44) reçoit l'arbre d'inclinaison (34) et laquelle rainure (44) dans sa partie rectiligne forme un angle par rapport à la partie de la rainure angulaire (38) du dispositif d'inclinaison (36), qui se superpose à la partie de la seconde rainure (18) qui n'est pas parallèle à la première rainure (16).

2. Affichage tête haute selon la revendication 1, **caractérisé en ce que** l'arbre de guidage de déplacement rectiligne (32) est fixé au combinateur (11) de sorte qu'une rotation de l'arbre de guidage de déplacement rectiligne (32) amène le combinateur (11) à s'incliner.

3. Affichage tête haute selon la revendication 1 ou 2, **caractérisé en ce que** le moteur (28) est fixé à l'arbre d'entraînement (26) de sorte que, en transmettant une force d'entraînement à l'arbre d'entraînement (26), le moteur (28) soit déplacé avec l'arbre d'entraînement (26) par rapport aux éléments de guidage latéraux (12, 14).

4. Affichage tête haute selon l'une quelconque des revendications précédentes, **caractérisé en ce que** l'arbre d'entraînement (26) et l'arbre d'inclinaison (34) sont fixés au moteur (28) de sorte que, par la transmission d'une force d'entraînement à l'arbre d'entraînement (26), le moteur (28) et l'arbre d'inclinaison (34) soient déplacés avec l'arbre d'entraînement (26) par rapport aux éléments de guidage latéraux (12, 14).

5. Affichage tête haute selon l'une quelconque des revendications précédentes, **caractérisé en ce que** pour déplacer l'arbre d'entraînement (26), l'arbre d'entraînement (26) comprend une roue dentée (46) à au moins une extrémité et au moins un élément de guidage latéral (12, 14) comprend une crémaillère (48) correspondant à la roue dentée (46) pour s'imbriquer avec la roue dentée (46).

6. Affichage tête haute selon l'une quelconque des revendications précédentes, **caractérisé en ce que** les éléments de guidage latéraux (12, 14) font partie d'un boîtier de l'affichage tête haute (10).

7. Affichage tête haute selon l'une quelconque des revendications précédentes, **caractérisé en ce que** l'affichage tête haute (10) comprend un capteur pour détecter la position du combinateur (11).

8. Affichage tête haute selon la revendication 7, **caractérisé en ce que** le capteur comprend un capteur Hall.

9. Affichage tête haute selon l'une quelconque des revendications précédentes, **caractérisé en ce que** la direction des secondes rainures (18) de chaque élément de guidage latéral (12, 14) est modifiée de sorte que les premières rainures (16) et la seconde rainure (18) convergent.

10. Affichage tête haute selon l'une quelconque des revendications 1 à 8, **caractérisé en ce que** la direction des secondes rainures (18) de chaque élément de guidage latéral (12, 14) est modifiée de sorte que les premières rainures (16) et la seconde rainure (18) divergent.
